# EUROPEAN PATENT APPLICATION

(11) **EP 4 444 001 A1**
(43) Date of publication of application: **09.10.2024**
(21) Application number: 21966125.3
(22) Date of filing: 03.12.2021
(51) Int. Cl.: H04W 72/04

(54) **SRS TRIGGERING METHOD AND APPARATUS, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Stöckeler, Ferdinand
(86) International application number: PCT/CN2021/135539
(87) International publication number: WO 2023/097699

(57) **Abstract**

The present invention relates to an SRS triggering method and apparatus, and a storage medium. The SRS triggering method is applied to a terminal, and comprises: according to different rules, respectively determining actual available time slots and trigger time slots for SRS resource sets in a plurality of SRS resource sets triggered by a same terminal, the trigger time slots meeting the condition that actual sending time slots of the SRS resource sets in the plurality of SRS resource sets are different. According to the present invention, a resource conflict of the actual sending time slots is avoided.

## Description

### TECHNICAL FIELD

The present disclosure relates to the field of communication technologies, in particular, to a method and an apparatus for triggering a sounding reference signal (SRS), and a storage medium.

### BACKGROUND

In a communication system, different sounding reference signals (SRS) are configured for different antenna switching configurations set for a terminal. A network configures a plurality of uplink SRS resource sets for the terminal, and one resource set includes one or more SRS resources.

In related arts, triggering of the SRS may be based on a semi-persistent slot offset configuration for radio resource control (RRC), and supports introduction of a dynamic slot configuration indicated by downlink control information (DCI) on a basic of the semi-persistent slot offset configuration, the DCI newly introduced is used to indicate specific offsets of a plurality of slot offsets configured by the RRC. Such triggering manner of the SRS may realize flexible triggering of the SRS, and may trigger a plurality of SRS resource sets on a component carrier (CC) simultaneously. However, when the plurality of SRS resource sets on one carrier are simultaneously triggered, resource collisions may occur between different SRS resources on a same available slot.

### SUMMARY

In order to overcome problems existing in the related art, a method and an apparatus for triggering an SRS, and a storage medium are provided in embodiments of the present disclosure.

According to a first aspect of embodiments of the present disclosure, there is provided a method for triggering a sounding reference signal (SRS), performed by a terminal. The method includes:

determining actual available slots and triggering slots for respective SRS resource sets in a plurality of SRS resource sets triggered by a same terminal, in which the triggering slots render different actual transmitting slots for the respective SRS resource sets in the plurality of SRS resource sets.

In an implementation, determining the actual available slots and the triggering slots for respective SRS resource sets in the plurality of SRS resource sets triggered by the same terminal includes: acquiring configuration information that triggers respective SRS resource sets in the plurality of SRS resource sets, in which the configuration information includes reference slot information, a slot offset candidate set, and a slot offset indication configured by a network signaling.

In an implementation, determining the actual available slots and the triggering slots for respective SRS resource sets in the plurality of SRS resource sets triggered by the same terminal includes: determining the actual available slots and the actual transmitting slots for respective SRS resource sets in the plurality of SRS resource sets according to a priority utilization rule indicated by a network signaling or a priority utilization rule of a protocol.

In an implementation, the network signaling includes a radio resource control (RRC) signaling, a medium access control (MAC) signaling, or a downlink control information (DCI) signaling.

In an implementation, the priority utilization rule is determined based on one or a combination of:

a usage corresponding to each SRS resource set, a carrier identifier corresponding to each SRS resource set, an identifier of each SRS resource set, time of reference available slots corresponding to each SRS resource set, or a number of symbols occupied by each SRS resource set.

In an implementation, the plurality of SRS resource sets are SRS resource sets activated by the terminal on one or more carriers, or SRS resources activated by the terminal on a same carrier.

According to a second aspect of embodiments of the present disclosure, there is provided a method for triggering a sounding reference signal (SRS), performed by a network device. The method includes:

determining actual available slots and triggering slots assigned to respective SRS resource sets in a plurality of SRS resource sets triggered by a same terminal, in which the triggering slots render different actual transmitting slots for the respective SRS resource sets in the plurality of SRS resource sets; transmitting the actual available slots and the triggering slots.

In an implementation, transmitting the actual available slots and the triggering slots includes:

transmitting configuration information that triggers respective SRS resource sets in the plurality of SRS resource sets, in which the configuration information includes reference slot information, a slot offset candidate set, and a slot offset indication configured by a network signaling.

In an implementation, transmitting the actual available slots and the triggering slots includes:

transmitting a network signaling, in which the network signaling is configured to indicate a priority utilization rule that is configured to determine the actual available slots and actual transmitting slots of respective SRS resource sets in the plurality of SRS resource sets.

In an implementation, the network signaling includes a radio resource control (RRC) signaling, a medium access control (MAC) signaling, or a downlink control information (DCI) signaling.

In an implementation, the priority utilization rule is determined based on one or a combination of:

a usage corresponding to each SRS resource set, a carrier identifier corresponding to each SRS resource set, an identifier of each SRS resource set, time of reference available slots corresponding to each SRS resource set, or a number of symbols occupied by each SRS resource set.

In an implementation, the plurality of SRS resource sets are SRS resource sets activated by the terminal on one or more carriers, or SRS resources activated by the terminal on a same carrier.

According to a third aspect of embodiments of the present disclosure, there is provided an apparatus for triggering a sounding reference signal (SRS). The apparatus includes:

a processing unit configured to determine actual available slots and triggering slots for respective SRS resource sets in a plurality of SRS resource sets triggered by a same terminal, in which, the triggering slots render different actual transmitting slots for the respective SRS resource sets in the plurality of SRS resource sets.

In an implementation, the processing unit is configured to acquire configuration information that triggers respective SRS resource sets in the plurality of SRS resource sets, in which the configuration information includes reference slot information, a slot offset candidate set, and a slot offset indication configured by a network signaling.

In an implementation, the processing unit is configured to determine the actual available slots and the actual transmitting slots for respective SRS resource sets in the plurality of SRS resource sets according to a priority utilization rule indicated by a network signaling or a priority utilization rule of a protocol.

In an implementation, the network signaling includes a radio resource control (RRC) signaling, a medium access control (MAC) signaling, or a downlink control information (DCI) signaling.

In an implementation, the priority utilization rule is determined based on one or a combination of:

a usage corresponding to each SRS resource set, a carrier identifier corresponding to each SRS resource set, an identifier of each SRS resource set, time of reference available slots corresponding to each SRS resource set, or a number of symbols occupied by each SRS resource set.

In an implementation, the plurality of SRS resource sets are SRS resource sets activated by the terminal on one or more carriers, or SRS resources activated by the terminal on a same carrier.

According to a fourth aspect of embodiments of the present disclosure, there is provided an apparatus for triggering a sounding reference signal (SRS). The apparatus includes:

a processing unit configured to determine actual available slots and triggering slots assigned to respective SRS resource sets in a plurality of SRS resource sets triggered by a same terminal, in which the triggering slots render different actual transmitting slots for the respective SRS resource sets in the plurality of SRS resource sets; a transmitting unit configured to transmit the actual available slots and the triggering slots.

In an implementation, the transmitting unit is configured to transmit configuration information that triggers respective SRS resource sets in the plurality of SRS resource sets, in which the configuration information includes reference slot information, a slot offset candidate set, and a slot offset indication configured by a network signaling.

In an implementation, the transmitting unit is configured to transmit a network signaling, in which the network signaling is configured to indicate a priority utilization rule that is configured to determine the actual available slots and actual transmitting slots of respective SRS resource sets in the plurality of SRS resource sets.

In an implementation, the network signaling includes a radio resource control (RRC) signaling, a medium access control (MAC) signaling, or a downlink control information (DCI) signaling.

In an implementation, the priority utilization rule is determined based on one or a combination of:

a usage corresponding to each SRS resource set, a carrier identifier corresponding to each SRS resource set, an identifier of each SRS resource set, time of reference available slots corresponding to each SRS resource set, or a number of symbols occupied by each SRS resource set.

In an implementation, the plurality of SRS resource sets are SRS resource sets activated by the terminal on one or more carriers, or SRS resources activated by the terminal on a same carrier.

According to a fifth aspect of embodiments of the present disclosure, there is provided an apparatus for triggering a sounding reference signal (SRS). The apparatus includes:

a processor; and a memory for storing instructions executable by the processor; in which, the processor is configured to perform the method for triggering the SRS as described in the first aspect or any one implementation of the first aspect.

According to a sixth aspect of embodiments of the present disclosure, there is provided an apparatus for triggering a sounding reference signal (SRS). The apparatus includes:

a processor; and a memory for storing instructions executable by the processor; in which, the processor is configured to perform the method for triggering the SRS as described in the second aspect or any one implementation of the second aspect.

According to a seventh aspect of embodiments of the present disclosure, there is provided a storage medium, having instructions stored thereon. The instructions in the storage medium may cause a terminal to perform the method for triggering the SRS as described in the first aspect or any one implementation of the first aspect when executed by a processor of the terminal.

According to an eighth aspect of embodiments of the present disclosure, there is provided a storage medium, having instructions stored thereon. The instructions in the storage medium may cause a terminal to perform the method for triggering the SRS as described in the second aspect or any one implementation of the second aspect when executed by a processor of the terminal.

The technical solution provided in embodiments of the present disclosure may include following beneficial effects. The actual available slots and the triggering slots are determined for respective SRS resource sets in the plurality of SRS resource sets triggered by the same terminal. The triggering slots render the different actual transmitting slots for the respective SRS resource sets in the plurality of SRS resource sets. Therefore, a resource conflict in the actual transmitting slots may be avoided.

It should be noted that, details above and in following are exemplary and illustrative, and do not constitute limitations on the present disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.
FIG. 1 a schematic diagram illustrating a wireless communication system according to an example embodiment of the present disclosure.
FIG. 2 is a schematic diagram illustrating a SRS mapping region within a slot according to an example embodiment of the present disclosure.
FIG. 3 is a schematic diagram illustrating flexible triggering for an SRS according to an example embodiment of the present disclosure.
FIG. 4 is a schematic diagram illustrating a resource conflict for an SRS according to an example embodiment of the present disclosure.
FIG. 5 is a flowchart illustrating a method for triggering an SRS according to an example embodiment of the present disclosure.
FIG. 6 is a flowchart illustrating a method for triggering an SRS according to an example embodiment of the present disclosure.
FIG. 7 is a flowchart illustrating a method for triggering an SRS according to an example embodiment of the present disclosure.
FIG. 8 is a flowchart illustrating a method for triggering an SRS according to an example embodiment of the present disclosure.
FIG. 9 is a flowchart illustrating a method for triggering an SRS according to an example embodiment of the present disclosure.
FIG. 10 is a flowchart illustrating a method for triggering an SRS according to an example embodiment of the present disclosure.
FIG. 11 is a schematic diagram illustrating an actual transmitting slot for an SRS resource according to an example embodiment of the present disclosure.
FIG. 12 is a block diagram illustrating an apparatus for triggering an SRS according to an example embodiment of the present disclosure.
FIG. 13 is a block diagram illustrating an apparatus for triggering an SRS according to an example embodiment of the present disclosure.
FIG. 14 is a block diagram illustrating an apparatus for triggering an SRS according to an example embodiment of the present disclosure.
FIG. 15 is a block diagram illustrating an apparatus for triggering an SRS according to an example embodiment of the present disclosure.

### DETAILED DESCRIPTION

The exemplary embodiments will be described, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure.

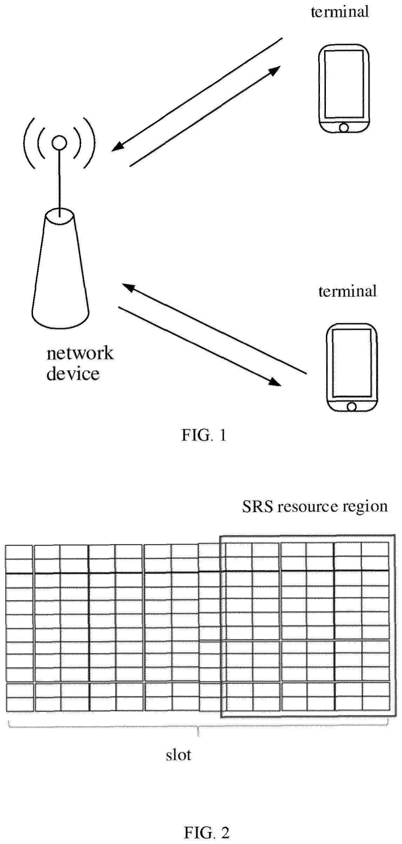

A method for triggering a sounding reference signal (SRS) provided by embodiments of the present disclosure may be applicable for a wireless communication system as illustrated in FIG. 1. Referring to FIG. 1, the wireless communication system includes a network device and a terminal. The terminal is coupled to the network device via a wireless resource, and performs data transmission with the network device.

It can be understood that the wireless communication system illustrated in FIG. 1 is only for illustrative description. The wireless communication system may also include other network devices, such as a core network device, a wireless relay device, and a wireless backhaul device, etc., which are not illustrated in FIG. 1. Embodiments of the present disclosure do not limit a number of network devices and a number of terminals included in the wireless communication system.

It may be further understood that, the wireless communication system in embodiments of the present disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA) and carrier sense multiple access with collision avoidance. Networks may be classified into a 2G (generation) network, a 3G network, a 4G network or a future evolution network, e.g., a 5G network, which may also be referred to as a new radio (NR) network, based on capacities, rates, latencies and other factors of different networks. For ease of description, a wireless communication network is simply referred to as a network in the disclosure sometimes.

Further, the network device in the present disclosure may also be referred to as a wireless access network device. The wireless access network device may be an access point (AP), a wireless relay node, a wireless backhaul node, a transmission point (TP), or a transmission and reception point (TRP), etc., in a base station, an evolved node B (a base station), a home base station and a wireless fidelity (WiFi) system, or may be a gNB in an NR system, or may also be a component constituting a base station or a part of a device. It should be understood that, a specific technology and a specific device form adopted by the network device are not limited in embodiments of the present disclosure. In the present disclosure, the network device may provide communication coverage for a specific geographical region, and may communicate with terminals located in a coverage region (cell). In addition, the network device may also be a vehicle-mounted device in an Internet of Vehicles (V2X) communication system.

Further, the terminal in the present disclosure further may be referred to as a terminal device, a user equipment (UE), a mobile station (MS), a mobile terminal (MT), etc., and is a device that provides voice and/or data connectivity to a user, and for example, the terminal may be a handheld device with a wireless connection function or a vehicle device, etc. Herein, some terminals include, for example, a mobile phone, a customer premise equipment (CPE), a pocket personal computer (PPC), a palm computer, a personal digital assistant (PDA), a notebook computer, a tablet computer, a wearable device, or a vehicle-mounted device, etc. In addition, the terminal device may also be a vehicle-mounted device in an Internet of Vehicles (V2X) communication system. It should be understood that, a specific technology and a specific device form adopted the terminal are not limited in embodiments of the present disclosure.

In related arts, a network may configure a plurality of uplink SRS resource sets for a terminal. One resource set includes one or more SRS resources. In a 5GNR system, an uplink SRS may be configured, and the uplink SRS may be a periodic SRS, a semi-persistent SRS or an aperiodic SRS. Narrowband or broadband, and single port or multiport may be configured. Uplink SRS parameters are configured by a network device for the terminal, and include a number of ports, a frequency domain resource position, a time domain resource position, a sequence, a sequence cycle offset, etc. In the 5G NR system, the SRS is mapped on up to six symbols of an uplink slot, as illustrated in FIG. 2, which illustrates a SRS mapping region within a slot.

The network device may configure a plurality of uplink SRS sets for the terminal, and one resource set includes one or more SRS resources. One SRS resource may be on N consecutive OFDM symbols, and N may occupy 1, 2, or 4 symbols.

The latest standard version 17 (R17) defines that a terminal may send an SRS on any symbol, and a length of the SRS may also transmit 14 symbols at most. An SRS resource set may be configured with different functions (usages), for example, may include an SRS for beam management, an SRS for codebook-based transmission, an SRS for non-codebook-based transmission, and an SRS for antenna switching.

In standard version 16 (Rel-16), the aperiodic SRS is triggered by an SRS request indication field in downlink control information (DCI) scheduled on a physical downlink control channel (PDCCH).

An SRS codepoint is used to indicate a SRS resource set to be transmitted, and SRS resource sets with different usages may correspond to a same code point and be triggered by a DCI indicated by an SRS request simultaneously. For example, codepoint 01 corresponds to triggering SRS resource set 1, codepoint 10 corresponds to triggering SRS resource set 2, and codepoint 11 corresponds to triggering SRS resource set 3.

In R17, an SRS flexible enhancement method is supported. The SRS flexible enhancement method of R17 is defined as a DCI flexible indication scheme based on available slots. Triggering of the SRS is specifically to add a dynamic slot offset indicated by the DCI on the basic of an original semi- persistent slot offset. An indication field of the DCI newly introduced is used to indicate specific slot offsets of a plurality of slot offsets configured by a RRC.

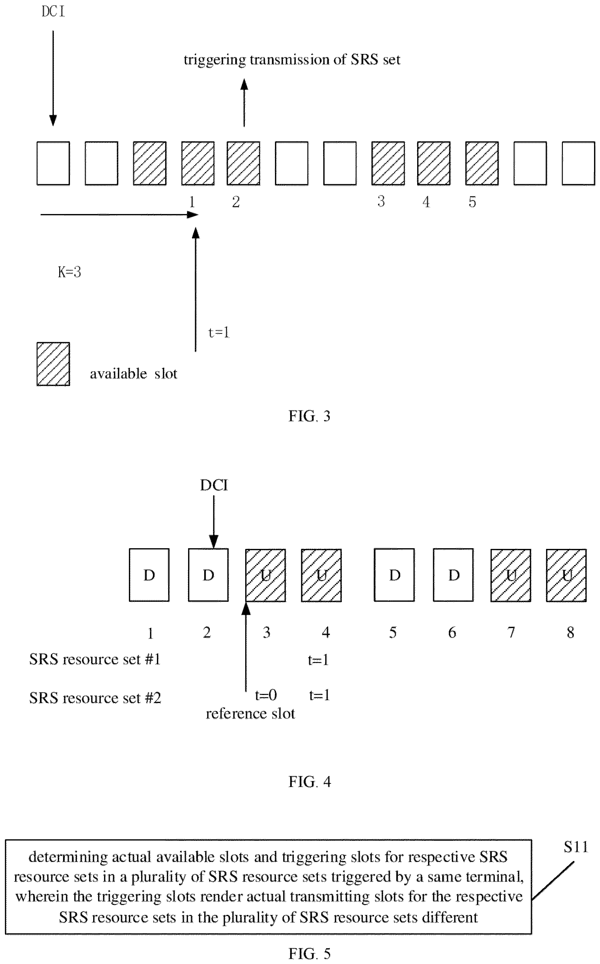

On the basic of a reference slot indicated by a flexible triggering offset (legacy triggering offset) = K configured in R15/16, flexible triggering of the SRS in the SRS enhancement of R17 is implemented by further indicating one value of t in a triggering offset set configured by the RRC through the DCI, and t is used to indicate an available slot of the terminal. Values of K and t of different SRS resource sets are independently configured, and the value of t can be configured by RRC up to 4 optional values. FIG. 3 is a schematic diagram illustrating flexible triggering of an SRS in an example embodiment of the present disclosure. Referring to FIG. 3, the DCI triggers the SRS set, and indicates K=3 in the DCI, thus it may be determined that a reference slot is a third slot after receiving a DCI indication, which is marked 1 in FIG. 3. Therefore, the actual available slots of the SRS resource sets may be determined in available slots based on the reference slot. Positions corresponding to 1, 2, 3, 4, and 5 marked in FIG. 3 are the actual available slots. Further, the value of t in the triggering offset set may be indicated by the DCI or the RRC. For example, in case of indicating t=1, it indicates that a slot corresponding to a first offset in an offset set is selected as a triggering slot. Assuming that a slot corresponding to a position marked as 1 in FIG. 3 in an embodiment of the present disclosure is used as the triggering slot, and the first offset in the offset set is 1 (counting from 0), the terminal selects a slot of slot t+1=2 in the available slots as the actual transmitting slot to trigger transmission of the SRS set. The method of flexibly triggering the SRS is compatible with an existing implementation method of terminal to the greatest extent, and realizes relatively flexible triggering of the SRS simultaneously. This solution improves flexibility of triggering A-SRS (aperiodic sounding reference signal) while ensuring consistent behavior between the network device such as a gNB and the terminal to determine available slots depending on RRC configuration, without considering any dynamic events.

However, a resource conflict may occur in the actual available slots when the SRS resource set is triggered in the determined available slots.

FIG. 4 is a schematic diagram illustrating a resource conflict occurring in an actual available slot in an example embodiment of the present disclosure. Referring to FIG. 4, D represents a downlink available slot, and U represents an uplink available slot. Assumed that two SRS resource sets including SRS resource set #1 and SRS resource set #2 are configured for uplink. SRS resource set #1 includes one SRS resource, and SRS resource set #2 includes two SRS resources. SRS resource set #1 and SRS resource set #2 have a same reference slot (a third slot), then the uplink actual available slots of SRS resource set #1 and SRS resource set #2 are slots numbered 3, 4, 7, 8. However, for SRS resource set #1 (including one SRS resource), the DCI activates a triggering slot (a slot numbered 4) indicating a slot offset t=1, and an actual transmitting slot of SRS resource set #1 is a slot numbered 4. For SRS resource set #2 (including two SRS resources), the DCI activates a triggering slot (a slot numbered 3) indicating a slot offset t=0. Since SRS resource set #2 includes two SRS resources, although the indicated slot offset is 0, two SRS resources occupy two slots, so the actual transmitting slots of SRS resource set #2 are slots numbered 3 and 4. The actual transmitting slot of SRS resource set #1 conflicts with the actual transmitting slots of SRS resource set #2, that is, the resource conflict occurs in the slot numbered 4. Therefore, when one DCI simultaneously triggers a plurality of different SRS resource sets, how to determine the actual available slot of each SRS resource set to avoid the resource collision is a problem to be solved.

An embodiment of the present disclosure provides a method for triggering an SRS. In the method for triggering the SRS, triggering slots render different actual transmitting slots for the respective SRS resource sets in a plurality of SRS resource sets. Therefore, occurrence of resource collision may be avoided in the actual transmitting slots.

FIG. 5 is a flowchart illustrating a method for triggering an SRS according to an example embodiment. The method for triggering the SRS may be executed independently or in combination with other embodiments. As illustrated in FIG. 5, the method for triggering the SRS is applied to a terminal and includes the following step.

At step S11, actual available slots and triggering slots are determined for respective SRS resource sets in a plurality of SRS resource sets triggered by a same terminal. The triggering slots render different actual transmitting slots for the respective SRS resource sets in the plurality of SRS resource sets.

In an embodiment of the present disclosure, the actual available slots are determined based on a semi-persistent configuration starting from a position of a reference slot. For example, the position of the reference slot and an actual triggering slot may be determined through a RRC semi-persistent configuration. The actual triggering slot may be determined based on a specific value specified in an optional slot offset of a triggering slot of the RRC semi-persistent configuration by a DCI. For example, the actual triggering slot may be indicated by DCI codepoint.

In an embodiment of the present disclosure, the triggering slot may be understood as indicating a slot corresponding to which value of t in the triggering offset set. That is, the triggering slot is a slot actually indicated by the value of t.

In an embodiment of the present disclosure, the actual transmitting slots may be determined in the actual available slots corresponding to respective SRS resource sets in the plurality of SRS resource sets based on the triggering slots. The actual transmitting slots of the SRS resource sets in the plurality of SRS resource sets are different.

In an embodiment of the present disclosure, during triggering the SRS, in order to make the actual transmitting slots of the SRS resource sets in the plurality of SRS resource sets different, the transmitting slots may be determined based on identifiers of the SRS resource sets. For example, the actual transmitting slots of respective SRS resource sets may be determined in order according to priorities of the identifiers of the SRS resource sets, and an SRS resource set with a priority having a later order uses a slot different from an actual transmitting slot of an SRS resource set with a priority having a former order, such that the actual transmitting slots of respective SRS resource sets in the plurality of SRS resource sets are different.

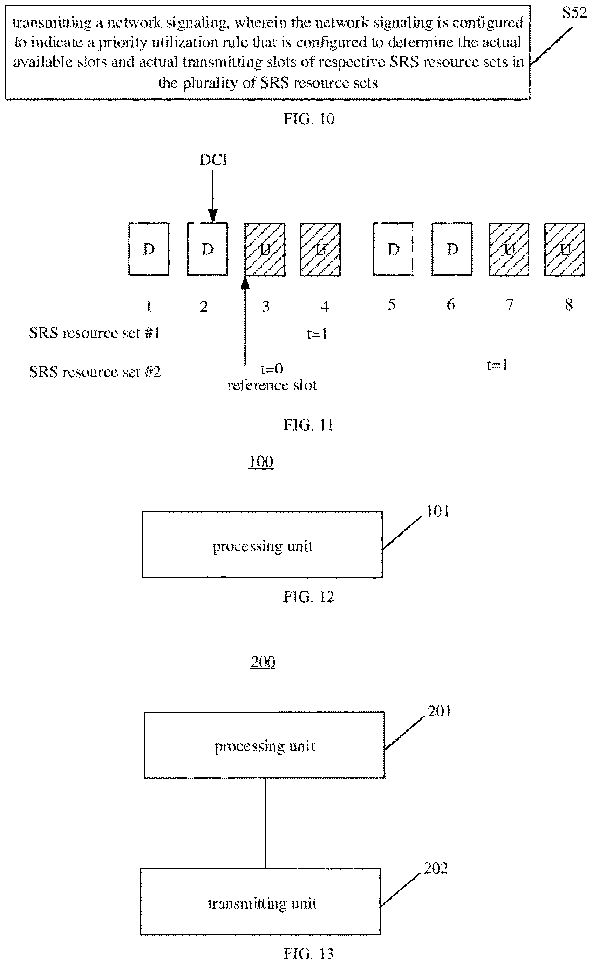

Taking FIG. 11 as an example, the above-mentioned process of triggering the SRS in an embodiment of the present disclosure is explained. FIG. 11 is a schematic diagram illustrating different actual transmitting slots of respective SRS resource sets in a plurality of SRS resource sets in an example embodiment of the present disclosure. Referring to FIG. 11, assumed that uplink available slots of a terminal are configured as slots corresponding to positions numbered 3, 4, 7 and 8 in FIG. 11. In FIG. 11, a position of a reference slot for both SRS resource set #1 and SRS resource set #2 are a third slot. Therefore, actual available slots for SRS resource set #1 and SRS resource set #2 are the slots corresponding to the positions numbered 3, 4, 7 and 8. A priority of SRS resource set #1 is higher than a priority of SRS resource set #2. When determining the actual transmitting slot of SRS resource set #1, a triggering slot of SRS resource set #1 is a slot numbered 4 indicated by t=1, and an actual transmitting time slot of SRS resource set #1 is the slot numbered 4. When determining the actual transmitting slot of SRS resource set #2, a triggering slot of SRS resource set #2 is configured as a slot numbered 3 with t=0, and a first SRS resource in SRS resource set #2 may use the slot numbered 3 as the actual transmitting slot. Since the actual transmitting slot of SRS resource set #2 cannot be the same as the actual transmitting slot of SRS resource set #1, an actual transmitting slot of the second SRS resource in SRS resource set #2 may be determined as a slot numbered 7. No same slot exists between SRS resource set #1 and SRS resource set #2, therefore, a resource conflict may be avoided.

In embodiments of the present disclosure, the actual available slots and the triggering slots are determined for respective SRS resource sets in the plurality of SRS resource sets triggered by the same terminal according to different rules. The actual transmitting slots for respective SRS resource sets in the plurality of SRS resource sets are different. Therefore, the resource conflict in the actual transmitting slots may be avoided.

In an implementation, the actual available slots and the triggering slots corresponding to respective SRS resource sets in the plurality of SRS resource sets triggered by the same terminal may be configured by the network device. The network device configures the actual available slots and the triggering slots corresponding to respective SRS resource sets in the plurality of SRS resource sets, ensuring that the actual transmitting slots for respective SRS resource sets in the plurality of SRS resource sets are different, further avoiding the resource conflict in the actual transmitting slots.

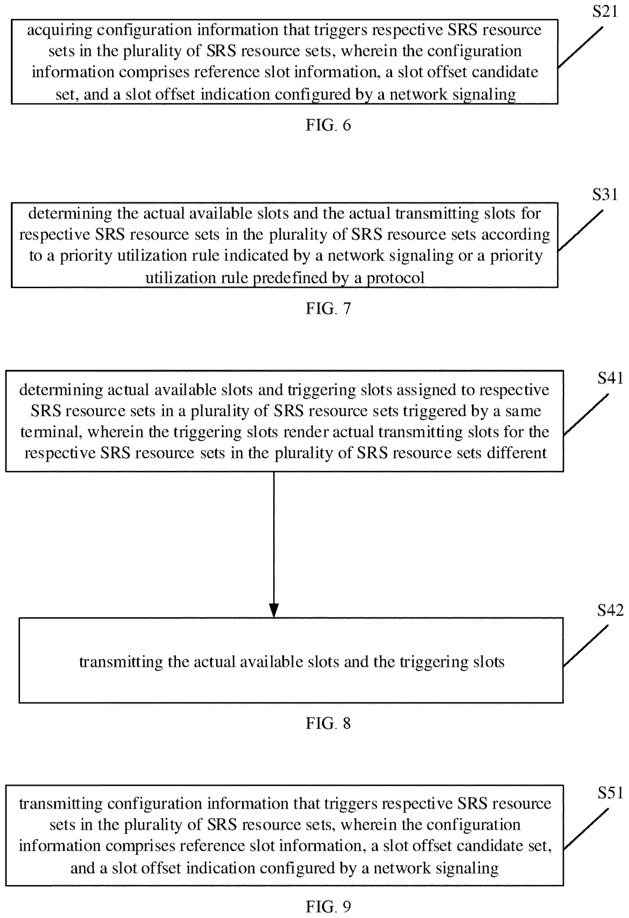

FIG. 6 is a flowchart illustrating a method for triggering an SRS according to an example embodiment. The method for triggering the SRS may be executed independently or in combination with other embodiments. As illustrated in FIG. 6, the method for triggering the SRS is applied to a terminal and includes the following step.

At step S21, configuration information that triggers respective SRS resource sets in the plurality of SRS resource sets is acquired. The configuration information includes reference slot information, a slot offset candidate set, and a slot offset indication configured by a network signaling.

In an embodiment of the present disclosure, the terminal acquires the configuration information that triggers respective SRS resource sets in the plurality of SRS resource sets, and determines the actual available slots and the triggering slots for respective SRS resource sets based on the reference slot information, the slot offset candidate set, and the slot offset indication included in the configuration information.

In an embodiment of the present disclosure, for each SRS resource set in the plurality of SRS resource sets, the terminal may independently determine the triggering slot and the actual available slot of each SRS resource set, and the actual transmitting slots finally determined in the actual available slots are different.

In another implementation, the terminal may determine the actual available slots and the actual transmitting slots for respective SRS resource sets in the plurality of SRS resource sets according to a priority utilization rule indicated by a network signaling or a priority utilization rule predefined by a protocol.

FIG. 7 is a flowchart illustrating a method for triggering an SRS according to an example embodiment. The method for triggering the SRS may be executed independently or in combination with other embodiments. As illustrated in FIG. 7, the method for triggering the SRS is applied to a terminal and includes the following step.

At step S31, the actual available slots and the actual transmitting slots for respective SRS resource sets in the plurality of SRS resource sets are determined according to a priority utilization rule indicated by a network signaling or a priority utilization rule predefined by a protocol.

It is understood that, in an embodiment of the present disclosure, the plurality of SRS resource sets are SRS resource sets activated by the terminal on one or more carriers, or SRS resources activated by the terminal on a same carrier. The same carrier may be understood as a carrier same as a carrier where the DCI (that is, the PDCCH) is located or a carrier which is indicated by the DCI.

The network signaling indicating the priority utilization rule includes a radio resource control (RRC) signaling, a medium access control (MAC) signaling, or a downlink control information (DCI) signaling.

In an implementation, the priority utilization rule is determined based on one or a combination of:
a usage corresponding to each SRS resource set, a carrier identifier corresponding to each SRS resource set, an identifier of each SRS resource set, or an actual triggering time corresponding to each SRS resource set.

In an example, in an embodiment of the present disclosure, the actual available slot may be determined based on the usage corresponding to each SRS resource set. For example, in a slot in which a resource conflict occurs, the SRS resource set with a usage having a higher priority is preferentially mapped. For example, an SRS resource set for antenna switching has a highest priority, and an SRS resource set for beam management has a lowest priority. When the resource conflict occurs between the SRS resource set for antenna switching and the SRS resource set for beam management in a certain slot, it is necessary to preferentially determine the slot as an actual available slot for the SRS resource set for antenna switching.

In yet another example, in an embodiment of the present disclosure, the actual available slot may be determined based on the carrier identifier corresponding to each SRS resource set. For example, in a slot where a resource conflict occurs, the SRS resource set with a carrier identifier having a higher priority is preferentially mapped. For example, an SRS resource set triggered on a carrier with a least carrier identifier has a highest priority, and an SRS resource set triggered on a carrier with a greatest carrier identifier has a lowest priority. When the resource conflict occurs between the SRS resource set triggered on the carrier with the least carrier identifier and the SRS resource set triggered on the carrier with the greatest carrier identifier in a certain slot, it is necessary to preferentially determine the slot as an actual available slot of the SRS resource set triggered on the carrier with the least carrier identifier.

In yet another example, in an embodiment of the present disclosure, the actual available slot may be determined based on the identifier of each SRS resource set. For example, in a slot where a resource conflict occurs, the SRS resource set with the identifier of the SRS resource set having a higher priority is preferentially mapped. For example, an SRS resource set with a least identifier of the SRS resource set has a highest priority, and an SRS resource set with a greatest identifier of the SRS resource set has a lowest priority. When the resource conflict occurs between the SRS resource set with the least identifier of the SRS resource set and the SRS resource set with the greatest identifier of the SRS resource set in a certain slot, it is necessary to preferentially determine the slot as an actual available slot for the SRS resource set with the least identifier of the SRS resource set.

In yet another example, in an embodiment of the present disclosure, the actual available time slot may be determined based on time of reference available slots corresponding to each SRS resource set. For example, in a time slot where a resource conflict occurs, the SRS resource set with the time of the reference available slots having a highest priority is preferentially mapped. For example, a priority of the SRS resource set with a former triggering slot is higher than a priority of the SRS resource set with a later triggering slot. When the resource conflict occurs between the SRS resource set with the former triggering slot and the SRS resource set with the later triggering slot in a certain slot, it is necessary to preferentially determine the slot as an actual available slot for the SRS resource set with the former triggering slot.

In yet another example, in an embodiment of the present disclosure, the actual available slot may be determined based on a number of symbols occupied by each SRS resource set. For example, in a slot where a resource conflict occurs, a SRS resource set with the number of symbols occupied by the SRS resource set having a higher priority is preferentially mapped. For example, a priority of an SRS resource set with a smaller number of symbols occupied by the SRS resource is higher than a priority of an SRS resource set with a larger number of symbols occupied by the SRS resource. When the resource conflict occurs in a slot between the SRS resource set with the smaller number of symbols occupied by the SRS resource and the SRS resource set with the larger number of symbols occupied by the SRS resource, it is necessary to preferentially determine the slot as the actual available slot for the SRS resource set with the smaller number of symbols occupied by the SRS resource.

It can be understood that in an embodiment of the present disclosure, when determining the actual available slots based on the priority utilization rule, the terminal may determine the actual available slots according to an order of the SRS resource sets corresponding to the priorities, and the actual available slots determined subsequently does not include the determined actual transmitting slots in the SRS resource sets.

In the method for triggering the SRS provided in embodiments of the present disclosure, for a case where the plurality of SRS resource sets are simultaneously triggered by one DCI, a configuration of the actual available slots is changed by selecting the available slots during triggering, thus reducing a SRS triggering collision in the actual transmission slots, ensuring that the transmission of a priority SRS in a system.

Based on the same concept, an embodiment of the present disclosure also provides a method for triggering an SRS executed by a network device.

FIG. 8 is a flowchart illustrating a method for triggering an SRS according to an example embodiment. The method for triggering the SRS may be executed independently or in combination with other embodiments. As illustrated in FIG. 8, the method for triggering the SRS is applied to a terminal and includes the following steps.

At step S41, actual available slots and triggering slots assigned to respective SRS resource sets in a plurality of SRS resource sets triggered by a same terminal are determined. The triggering slots render different actual transmitting slots for the respective SRS resource sets in the plurality of SRS resource sets.

At step S42, the actual available slots and the triggering slots are transmitted.

In an embodiment of the present disclosure, the network device sends the actual available slots and the triggering slots to the terminal based on the determined actual available slots and the determined triggering slots.

FIG. 9 is a flowchart illustrating a method for triggering an SRS according to an example embodiment. The method for triggering the SRS may be executed independently or in combination with other embodiments. As illustrated in FIG. 9, the method for triggering the SRS is applied to a terminal and includes the following steps.

At step S51, configuration information that triggers respective SRS resource sets in the plurality of SRS resource sets is transmitted. The configuration information includes reference slot information, a slot offset candidate set, and a slot offset indication configured by a network signaling.

FIG. 10 is a flowchart illustrating a method for triggering an SRS according to an example embodiment. The method for triggering the SRS may be executed independently or in combination with other embodiments. As illustrated in FIG. 10, the method for triggering the SRS is applied to a terminal and includes the following steps.

At step S52, a network signaling is transmitted. The network signaling is configured to indicate a priority utilization rule that is configured to determine the actual available slots and actual transmitting slots of respective SRS resource sets in the plurality of SRS resource sets.

In an implementation, the network signaling includes a radio resource control (RRC) signaling, a medium access control (MAC) signaling, or a downlink control information (DCI) signaling.

In an implementation, the priority utilization rule is determined based on one or a combination of:
a usage corresponding to each SRS resource set, a carrier identifier corresponding to each SRS resource set, an identifier of each SRS resource set, time of reference available slots corresponding to each SRS resource set, or a number of symbols occupied by each SRS resource set.

In an implementation, the plurality of SRS resource sets are SRS resource sets activated by the terminal on one or more carriers, or SRS resources activated by the terminal on a same carrier.

It can be understood that the method for triggering the SRS performed by the network device in an embodiment of the present disclosure is similar to the method for triggering the SRS performed by the terminal. Therefore, insufficiently detailed description for the method for triggering the SRS performed by the network device may refer to related contents of the method for triggering the SRS performed by the terminal, which will not be described in detail herein.

It can be further understood that the method for triggering the SRS provided by embodiments of the present disclosure is applicable for a process of implementing SRS triggering through interaction between the terminal and the network device. For the process of implementing the SRS triggering through the interaction between the terminal and the network device, the terminal and the network device have relevant functions in the foregoing embodiments.

In the method for triggering the SRS provided by embodiments of the present disclosure, the determined actual available slots and the determined triggering slots meet the that the actual transmitting slots of respective SRS resource sets in the plurality of SRS resource sets triggered by the same terminal are different.

In an embodiment of the present disclosure, during triggering the SRS, in order to make the actual transmitting slots of the SRS resource sets in the plurality of SRS resource sets different, the transmitting slots may be determined based on identifiers of the SRS resource sets. For example, the actual transmitting slots of respective SRS resource sets may be determined in order according to priorities of the identifiers of the SRS resource sets, and an SRS resource set with a priority having a later order uses a slot different from an actual transmitting slot of an SRS resource set with a priority having a former order, such that the actual transmitting slots of respective SRS resource sets in the plurality of SRS resource sets are different.

Taking FIG. 11 as an example, the above-mentioned process of triggering the SRS in an embodiment of the present disclosure is explained. FIG. 11 is a schematic diagram illustrating different actual transmitting slots of respective SRS resource sets in a plurality of SRS resource sets in an example embodiment of the present disclosure. Referring to FIG. 11, assumed that uplink available slots of a terminal are configured as slots corresponding to positions numbered 3, 4, 7 and 8 in FIG. 11. In FIG. 11, a position of a reference slot for both SRS resource set #1 and SRS resource set #2 are a third slot. Therefore, actual available slots for SRS resource set #1 and SRS resource set #2 are the slots corresponding to the positions numbered 3, 4, 7 and 8. A priority of SRS resource set #1 is higher than a priority of SRS resource set #2. When determining the actual transmitting slot of SRS resource set #1, a triggering slot of SRS resource set #1 is a slot numbered 4 indicated by t=1, and an actual transmitting time slot of SRS resource set #1 is the slot numbered 4. When determining the actual transmitting slot of SRS resource set #2, a triggering slot of SRS resource set #2 is configured as a slot numbered 3 with t=0, and a first SRS resource in SRS resource set #2 may use the slot numbered 3 as the actual transmitting slot. Since the actual transmitting slot of SRS resource set #2 cannot be the same as the actual transmitting slot of SRS resource set #1, an actual transmitting slot of the second SRS resource in SRS resource set #2 may be determined as a slot numbered 7. No same slot exists between SRS resource set #1 and SRS resource set #2, therefore, a resource conflict may be avoided.

It should be noted that those skilled in the art can understand that various implementations/embodiments mentioned in the above embodiments of the present disclosure can be used in combination with the foregoing embodiments, or can be used independently. Whether used independently or in combination with the foregoing embodiments, their implementation principles are similar. In an embodiment of the present disclosure, some embodiments are described in a manner of being used together. Of course, those skilled in the art can understand that such an illustration is not a limitation to embodiments of the present disclosure.

Based on the same conception, an apparatus for triggering a sounding reference signal (SRS) is further provided in embodiments of the present disclosure.

It may be understood that, the apparatus for triggering the SRS provided in embodiments of the present disclosure includes hardware structures and/or software modules that perform corresponding functions in order to achieve the above functions. In combination with units and algorithm steps of examples described in embodiments of the present disclosure, embodiments of the present disclosure may be implemented in the form of hardware or a combination of the hardware and computer software. Whether a certain function is executed by the hardware or the computer software driving the hardware depends on specific applications and design constraints of the technical solution. Those skilled in the art may adopt different methods for each specific application to implement the described functions, but such implementation should not be considered as beyond the scope of the technical solutions in embodiments of the present disclosure.

FIG. 12 is a block diagram illustrating an apparatus for triggering a sounding reference signal (SRS) according to an example embodiment. As illustrated in FIG. 12, the apparatus 100 for triggering the SRS is applicable to a terminal, and includes a processing unit 101.

The processing unit 101 is configured to determine actual available slots and triggering slots for respective SRS resource sets in a plurality of SRS resource sets triggered by a same terminal, in which, the triggering slots render different actual transmitting slots for the respective SRS resource sets in the plurality of SRS resource sets.

In an implementation, the processing unit 101 is configured to acquire configuration information that triggers respective SRS resource sets in the plurality of SRS resource sets, in which the configuration information includes reference slot information, a slot offset candidate set, and a slot offset indication configured by a network signaling.

In an implementation, the processing unit 101 is configured to determine the actual available slots and the actual transmitting slots for respective SRS resource sets in the plurality of SRS resource sets according to a priority utilization rule indicated by a network signaling or a priority utilization rule of a protocol.

In an implementation, the network signaling includes a radio resource control (RRC) signaling, a medium access control (MAC) signaling, or a downlink control information (DCI) signaling.

In an implementation, the priority utilization rule is determined based on one or a combination of:
a usage corresponding to each SRS resource set, a carrier identifier corresponding to each SRS resource set, an identifier of each SRS resource set, time of reference available slots corresponding to each SRS resource set, or a number of symbols occupied by each SRS resource set.

In an implementation, the plurality of SRS resource sets are SRS resource sets activated by the terminal on one or more carriers, or SRS resources activated by the terminal on a same carrier.

FIG. 13 is a block diagram illustrating an apparatus for triggering a sounding reference signal (SRS) according to an example embodiment. As illustrated in FIG. 13, the apparatus 200 for triggering the SRS is applicable to a network device, and includes a processing unit 201 and a transmitting unit 202.

The processing unit 201 is configured to determine actual available slots and triggering slots assigned to respective SRS resource sets in a plurality of SRS resource sets triggered by a same terminal, in which the triggering slots render different actual transmitting slots for the respective SRS resource sets in the plurality of SRS resource sets. The transmitting unit 202 is configured to transmit the actual available slots and the triggering slots.

In an implementation, the transmitting unit 202 is configured to transmit configuration information that triggers respective SRS resource sets in the plurality of SRS resource sets, in which the configuration information includes reference slot information, a slot offset candidate set, and a slot offset indication configured by a network signaling.

In an implementation, the transmitting unit 202 is configured to transmit a network signaling, in which the network signaling is configured to indicate a priority utilization rule that is configured to determine the actual available slots and actual transmitting slots of respective SRS resource sets in the plurality of SRS resource sets.

In an implementation, the network signaling includes a radio resource control (RRC) signaling, a medium access control (MAC) signaling, or a downlink control information (DCI) signaling.

In an implementation, the priority utilization rule is determined based on one or a combination of:
a usage corresponding to each SRS resource set, a carrier identifier corresponding to each SRS resource set, an identifier of each SRS resource set, time of reference available slots corresponding to each SRS resource set, or a number of symbols occupied by each SRS resource set.

In an implementation, the plurality of SRS resource sets are SRS resource sets activated by the terminal on one or more carriers, or SRS resources activated by the terminal on a same carrier.

With regards to the apparatus in the above embodiments, the specific way in which each module performs the operation has been described in embodiments of the method and will not be described in detail herein.

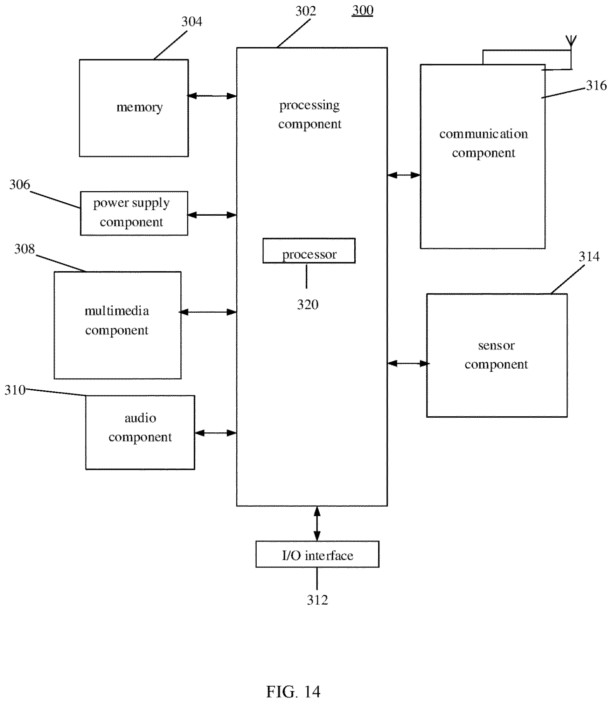

FIG. 14 is a block diagram illustrating an apparatus 300 for triggering a sounding reference signal (SRS) according to an example embodiment. For example, the apparatus 300 may be a mobile phone, a computer, a digital broadcasting terminal, a messaging device, a game console, a tablet device, a medical equipment, a fitness equipment, a personal digital assistant, etc.

As illustrated in FIG. 14, the apparatus 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the apparatus 300, such as operations related to display, phone call, data communication, camera operation and recording operation. The processing component 302 may include one or more processors 320 to perform instructions, to complete all or part of steps of the above method. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the apparatus 300. Examples of the data include the instructions of any applications or methods operated on the apparatus 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The power supply component 306 may provide power supply for all components of the apparatus 300. The power supply component 306 may include a power supply management system, one or more power supplies, and other units related to generating, managing and distributing power for the apparatus 300.

The multimedia component 308 includes an output interface screen provided between the apparatus 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the apparatus 300 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 310 is configured as an output and/or input signal. For example, the audio component 310 includes a microphone (MIC). When the apparatus 300 is in operation mode, such as call mode, record mode, and speech recognition mode, the microphone is configured to receive the external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the apparatus 300. For example, the sensor component 314 may detect the on/off state of the apparatus 300 and relative positioning of the component. For example, the component is a display and a keypad of the apparatus 300. The sensor component 314 may further detect the location change of the apparatus 300 or one component of the apparatus 300, the presence or absence of contact between the user and the apparatus 300, the orientation or acceleration/deceleration of the apparatus 300, and the temperature change of the apparatus 300. The sensor component 314 may include a proximity sensor, which is configured to detect the existence of the objects nearby without any physical contact. The sensor component 314 may further include a light sensor such as a CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the apparatus 300 and other devices. The apparatus 300 may access wireless networks based on communication standard, such as WiFi, 2G or 3G, or their combination. In an exemplary embodiment, the communication component 316 receives broadcast signals or broadcast-related information from an external broadcast management system via a broadcast channel. In an exemplary embodiment, the communication component 316 further includes a near field communication (NFC) module to facilitate short-range communication. For example, an NFC module may be implemented based on a radio frequency identification (RFID) technology, an infrared data association (IRDA) technology, an ultra-wideband (UWB) technology, bluetooth (BT) technology and other technologies.

In an exemplary embodiment, the apparatus 300 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an exemplary embodiment, a non-transitory computer readable storage medium is further provided which includes instructions, such as the memory 304 including instructions. The instructions may be executed by the processor 420 of the apparatus 300 to complete the above methods. For example, the non-transitory computer-readable storage medium may be a ROM, a random access memory (RAM), a CD-ROM, a magnetic tape, a floppy disk, an optical data storage device, etc.

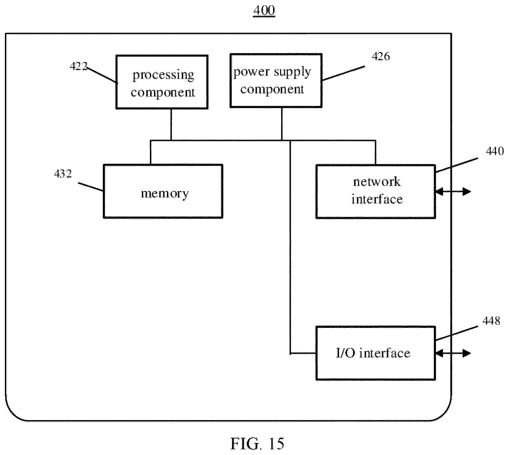

FIG. 15 is a block diagram illustrating an apparatus 400 for triggering a sounding reference signal (SRS) according to an example embodiment. For example, the apparatus 400 may be provided as a network device. Referring to FIG. 15, the apparatus 400 includes a processing component 422, which further includes one or more processors, and memory resources represented by a memory 432, which are configured to store instructions executable by the processing component 422, and for example, an application program. The application stored in the memory 432 may include one or more modules each of which corresponds to a set of instructions. In addition, the processing component 422 is configured to execute instructions, to perform the above method.

The apparatus 400 may further include one power supply component 426 configured to execute power management of the apparatus 400, and one wired or wireless network interface 440 configured to connect the apparatus 400 to a network, and one input/output(I/O) interface 448. The apparatus 400 may operate an operating system stored in the memory 432, for example, Windows ServerTM, Mac OS XTM, UnixTM, LinuxTM, FreeBSDTM.

In an example embodiment, the apparatus 400 may be implemented by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors or other electronic components, to perform the method as described above.

In an example embodiment, there is also provided a non-transitory computer-readable storage medium including instructions, such as the memory 432 including the instructions. The above instructions may be performed by the processing component 422 of the apparatus 400 to implement the above method. For example, the non-transitory computer-readable storage medium may be a ROM, a random access memory (RAM), a CD-ROM, a magnetic tape, a floppy disk, an optical data storage device, and the like.

It may be further understood that, "a plurality of" in the present disclosure means two or above, which is similar to other quantifiers. "and/or", describes the relationship of the association objects, indicating that there may exist three relationships, for example, A and/or B, may represent: any of existing A only, existing both A and B, or existing B only. The character "/" generally means the contextual object is a kind of "or" relationship. The singular forms "a", "the" and "said are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this present disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure.

It should be understood that the present disclosure is not limited to the precise structure described above and shown in the drawings, and various modifications and changes may be made without departing from its scope. The scope of the present application is only limited by the appended claims.

## Claims

1. A method for triggering a sounding reference signal (SRS), performed by a terminal, comprising:
determining actual available slots and triggering slots for respective SRS resource sets in a plurality of SRS resource sets triggered by a same terminal, wherein the triggering slots render different actual transmitting slots for the respective SRS resource sets in the plurality of SRS resource sets.

2. The method according to claim 1, wherein determining the actual available slots and the triggering slots for respective SRS resource sets in the plurality of SRS resource sets triggered by the same terminal comprises:
acquiring configuration information that triggers respective SRS resource sets in the plurality of SRS resource sets, wherein the configuration information comprises reference slot information, a slot offset candidate set, and a slot offset indication configured by a network signaling.

3. The method according to claim 1, wherein determining the actual available slots and the triggering slots for respective SRS resource sets in the plurality of SRS resource sets triggered by the same terminal comprises:
determining the actual available slots and the actual transmitting slots for respective SRS resource sets in the plurality of SRS resource sets according to a priority utilization rule indicated by a network signaling or a priority utilization rule of a protocol.

4. The method according to claim 3, wherein the network signaling comprises a radio resource control (RRC) signaling, a medium access control (MAC) signaling, or a downlink control information (DCI) signaling.

5. The method according to claim 3 or 4, wherein the priority utilization rule is determined based on one or a combination of:
a usage corresponding to each SRS resource set, a carrier identifier corresponding to each SRS resource set, an identifier of each SRS resource set, time of reference available slots corresponding to each SRS resource set, or a number of symbols occupied by each SRS resource set.

6. The method according to any one of claims 3 to 5, wherein the plurality of SRS resource sets are SRS resource sets activated by the terminal on one or more carriers, or SRS resources activated by the terminal on a same carrier.

7. A method for triggering a sounding reference signal (SRS), performed by a network device, comprising:
determining actual available slots and triggering slots assigned to respective SRS resource sets in a plurality of SRS resource sets triggered by a same terminal, wherein the triggering slots render different actual transmitting slots for the respective SRS resource sets in the plurality of SRS resource sets; and
transmitting the actual available slots and the triggering slots.

8. The method according to claim 7, wherein transmitting the actual available slots and the triggering slots comprises:
transmitting configuration information that triggers respective SRS resource sets in the plurality of SRS resource sets, wherein the configuration information comprises reference slot information, a slot offset candidate set, and a slot offset indication configured by a network signaling.

9. The method according to claim 7, wherein transmitting the actual available slots and the triggering slots comprises:
transmitting a network signaling, wherein the network signaling is configured to indicate a priority utilization rule that is configured to determine the actual available slots and actual transmitting slots of respective SRS resource sets in the plurality of SRS resource sets.

10. The method according to claim 9, wherein the network signaling comprises a radio resource control (RRC) signaling, a medium access control (MAC) signaling, or a downlink control information (DCI) signaling.

11. The method according to claim 9 or 10, wherein the priority utilization rule is determined based on one or a combination of:
a usage corresponding to each SRS resource set, a carrier identifier corresponding to each SRS resource set, an identifier of each SRS resource set, time of reference available slots corresponding to each SRS resource set, or a number of symbols occupied by each SRS resource set.

12. The method according to any one of claims 9 to 11, wherein the plurality of SRS resource sets are SRS resource sets activated by the terminal on one or more carriers, or SRS resources activated by the terminal on a same carrier.

13. An apparatus for triggering a sounding reference signal (SRS), comprising:
a processing unit configured to determine actual available slots and triggering slots for respective SRS resource sets in a plurality of SRS resource sets triggered by a same terminal, wherein the triggering slots render different actual transmitting slots for the respective SRS resource sets in the plurality of SRS resource sets.

14. An apparatus for triggering a sounding reference signal (SRS), comprising:
a processing unit configured to determine actual available slots and triggering slots assigned to respective SRS resource sets in a plurality of SRS resource sets triggered by a same terminal, wherein the triggering slots render different actual transmitting slots for the respective SRS resource sets in the plurality of SRS resource sets; and
a transmitting unit configured to transmit the actual available slots and the triggering slots.

15. An apparatus for triggering a sounding reference signal (SRS), comprising:
a processor;
a memory for storing instructions executable by the processor;
wherein the processor is configured to perform the method for triggering the SRS according to any one of claims 1 to 6.

16. An apparatus for triggering a sounding reference signal (SRS), comprising:
a processor;
a memory for storing instructions executable by the processor;
wherein the processor is configured to perform the method for triggering the SRS according to any one of claims 7 to 12.

17. A storage medium, having instructions stored thereon, wherein the instructions in the storage medium may cause a terminal to perform the method for triggering the SRS according to any one of claims 1 to 6 when executed by a processor of the terminal.

18. A storage medium, having instructions stored thereon, wherein the instructions in the storage medium may cause a network device to perform the method for triggering the SRS according to any one of claims 7 to 12 when executed by a processor of the network device.
